# EUROPÄISCHE PATENTANMELDUNG

(11) **EP 3 173 982 A1**
(43) Veröffentlichungstag der Anmeldung: **31.05.2017**
(21) Anmeldenummer: 16002432.9
(22) Anmeldetag: 15.11.2016
(51) Int. Cl.: G06K 19/077, B23K 26/08

(54) **VERFAHREN ZUR INDIVIDUALISIERUNG EINES CHIPMODULS MITSAMT INDIVIDUALISIERTEM CHIPMODUL**

(30) Priorität: 24.11.2015 DE 102015015201
(71) Anmelder: Giesecke & Devrient GmbH, 81677 München (DE)
(72) Erfinder: Tarantino, Thomas, 83410 Laufen (DE); Griesmeier, Robert, 83052 Bruckmühl (DE)

(57) **Zusammenfassung**

Es wird erfindungsgemäß ein Verfahren, ein Chipmodul, eine Vorrichtung zum Individualisieren und ein entsprechendes Computerprogramm vorgeschlagen. Diese ermöglichen es auch Kleinserien von Chipmodulen zu individualisieren, ohne in bestehende technische Produktionsprozesse einzugreifen.

## Beschreibung

Die Erfindung betrifft ein Verfahren zum Individualisieren eines Chipmoduls für einen tragbaren Datenträger, ein entsprechend ausgestaltetes Chipmodul, sowie eine Vorrichtung zum Individualisieren eines Chipmoduls. Ferner wird ein Computerprogramm vorgeschlagen, welches einen Computer veranlasst das Verfahren auszuführen.

Aus dem Stand der Technik sind Chipmodule für tragbare Datenträger, wie z. B. Identitätskarten, Pässe, Ausweise, SIM-Karten, Kreditkarten etc. für kontaktlose und kontaktbehaftete Kontaktierung bekannt. Die Chipmodule werden während eines Herstellungsprozesses eines tragbaren Datenträgers in den Datenträger implantiert. Ferner sind aus dem Stand der Technik Sicherheitsdokumente bekannt, die ein so genanntes Inlay oder eine so genannte Inlay-Lage beinhalten. Ein Inlay kann hierbei eine Trägerlage, z.B. eine als Trägerfolie ausgebildete Trägerlage, umfassen, die mit aktiven und passiven elektrischen oder elektronischen Bauelementen bestückt wird.

Die DE 10 2005 048 033 B4 zeigt ein Sicherheitsdokument mit einem grafischen Muster zur visuellen Wiedergabe von personen- und/ oder produktbezogenen Daten, das mindestens ein Bild und/oder Textdaten umfasst, die mit einem vorbestimmten Druckalgorithmus derart auf das Sicherheitsdokument aufgebracht sind, dass sie eine durch den Druckalgorithmus vorbestimmte elektromagnetische Eigenschaft enthalten, die über eine im Sicherheitsdokument enthaltene Logikschaltung auslesbar ist.

Die US 2003/0059987 A1 zeigt die Herstellung von elektronischen Schaltelementen und integrierten Schaltungen auf drucktechnischem Wege mit entsprechenden leitfähigen Farben und halbleitenden Tinten und insbesondere mit polymeren Halbleitern. Auf diese Weise lassen sich flexible ICs auf Papier oder papierähnlichen Substraten anbringen.

Die DE 10 2009 007 552 A1 beschreibt ein Verfahren zur Herstellung von mehrlagigen Sicherheitsprodukten, bestehend aus zumindest einer Karte und zumindest einer auf zumindest einer Seite der Karte aufgebrachten Polymerfolie, welche als Rollenware bereitgestellt wird und mit zumindest einem Sicherheitsmerkmal versehen ist. Hierbei werden eine Rollenbahn der Polymerfolie und zumindest ein Streifen mit einer n-fachen Anzahl an Nutzen einer Kaschierstation zugeführt und kaschiert.

Einschlägige Dokumente enthalten darüber hinaus in der Regel eine Vielzahl von Sicherheitsmerkmalen, die Fälschungen und Manipulationen am Inhalt des Dokuments und dessen Missbrauch verhindern sollen. Solche Sicherheitsmerkmale sind bspw. Mikroschriften, Sicherheitsdrucke mit mehrfarbigen Guillochen, also Schutzmustern aus feinen, miteinander verschlungenen Linien, sowie Fluoreszenzmarkierungen, Wasserzeichen, Laserdrucke, Hologramme u.v.a. Insbesondere werden Sicherheitsdokumente durch Chipmodule mit ICs geschützt und mit Transpondem ausgestattet, um sie maschinell mit RFID-Technik auslesen zu können.

Die bekannten Chipkarten sind in ihren Abmessungen genormt und weisen einen ein- oder mehrlagig ausgeführten Chipkartenkörper auf, der eine interne, elektrische Verschaltung enthalten kann. So ist es bekannt, einzelne elektronische Bauelemente, integrierte Schaltkreise oder Spannungsquellen auf einem gemeinsamen Baueinheitenträger unterzubringen, wobei als Baueinheitenträger beispielsweise eine Kunststofffolie dienen kann. Dieser Baueinheitenträger kann ebenso mit den zur elektrischen Verbindung erforderlichen Leiterbahnen versehen sein.

Zum kontaktbehafteten Datenaustausch zwischen der Chipkarte und externen Geräten ist es bekannt, an mindestens einer Außenoberfläche der Chipkarte Kontakte vorzusehen, um somit die Datenübertragung zu ermöglichen. Weiterhin sind Ausführungen zur kontaktlosen Datenübermittlung zwischen einer Chipkarte und einem externen Gerät bekannt, wobei hierzu in den Chipkartenkörper eine Sende- beziehungsweise Empfangseinheit integriert wird, die beispielsweise aus einer Spule oder Antenne bestehen kann.

Tragbare Datenträger, wie kartenförmige Datenträger und insbesondere Chipkarten, werden in vielen Bereichen eingesetzt. Beispielsweise werden Chipkarten für den bargeldlosen Zahlungsverkehr verwendet oder dienen der Identifikation, beispielsweise in Form einer SIM-Karte im Mobilfunk oder allgemein als Nachweis einer Zugangsberechtigung oder als Ausweisdokument. Tragbare Datenträger weisen dazu einen integrierten Schaltkreis auf, wobei ein Daten- und/oder Energietransfer mit einem externen Gerät über verschiedene Schnittstellen möglich ist. Sogenannte Dual-Interface-Karten weisen sowohl metallische Kontaktflächen für eine kontaktbehaftete Verbindung und eine Antennenspule, im Folgenden Antenne genannt, für eine kontaktlose Verbindung mit einem externen Gerät auf. Chipmodule mit diesen beiden Schnittstellen werden entsprechend Dual-Interface-Module genannt.

Bei Chipmodulen, auf denen auch die mit dem integrierten Schaltkreis verbundene Antenne angeordnet ist, wird die Antennenspule auch als "Coil on Module" bezeichnet. Im Gegensatz dazu kann die Antennenspule auch in dem Kartenkörper angeordnet und über entsprechende Verbindungsstellen mit dem integrierten Schaltkreis verbunden sein.

Verschiedene Sicherheitsdruckerzeugnisse, wie z.B. Kreditkarten, Personaldokumente, Produktschutzetiketten, Banknoten etc., sind heute in großer Zahl mit Sicherheitsetiketten ausgerüstet. Als Varianten kommen dabei als holographische Sicherheitslabel sowohl metallisierte und nicht metallisierte Prägehologramme oder auch Volumenhologramme zum Einsatz. Holographische Sicherheitslabel haben nach dem Stand der Technik jedoch den Nachteil, dass sie in der Regel nicht individuell personalisierbar sind.

Aus Gründen des besseren Fälschungsschutzes ist es aber zu bevorzugen, Sicherheitsmerkmale zu verwenden, die personalisierbar sind, das heißt die individuell für jedes Sicherheitsdokument gefertigt werden. Unter solchen personalisierbaren, individuellen Sicherheitsmerkmalen versteht man z.B. die Seriennummer oder im Falle von personengebundenen Sicherheitsdokumenten den Namen, die Unterschrift oder ein Portrait.

Oftmals ist es notwendig an Chips ein "Customizing", also eine Individualisierung durchzuführen. Das bedeutet, dass die Moduloberflächen Logos, Bilder u.a. enthalten sollen, oder dass die Modulform (die Kontaktflächen, Außengeometrie) z.B. ein Logo darstellen soll. Die derzeit existierenden Lösungen haben den Nachteil, dass die Anpassung der Module bereits beim Lieferanten durchgeführt werden muss. Dies würde für den Hersteller eine hohe Modulvariantenvielfalt bedeuten. Es entstehen höhere Modul-Kosten, da diese Varianten typischerweise in geringeren Mengen (z.B. einige 10tausend bis einige 100tausend) bestellt werden müssen, da einzelne Kunden keine großen Mengen benötigen), was Nachteile im Einkauf mit sich bringt. Varianten laufen beim Tapehersteller auch als "Sonderprodukte" zu einem höheren Verkaufspreis und mit größerem technischen Aufwand. Falls das "Customizing" durch Veränderung der Modulform stattfindet entsteht zusätzlich der Nachteil, dass der Hersteller für jede Variante entsprechende Werkzeuge, wie Hotmelt-Laminator, Implanter (Modulstanzen, Stempel) beschaffen muss. Durch die unterschiedlichen Werkzeuge entstehen zusätzlich gesteigerte Rüstzeiten. Unterschiedliche Formen bedeuten meist zusätzlich unterschiedliche Fräskavitäten mit entsprechenden Nachteilen.

Problematisch ist, dass eine Individualisierung von Chipmodulen sehr kostenintensiv und technische aufwändig sind. Wird ein Modulträgerband mit einer Trägerfolie individualisiert so entsteht daher ein technischer Aufwand, dass die typischerweise in großen Mengen bereitgestellten Module nur in Kleinserie mit individuellen Merkmalen hergestellt werden können.

Es ist daher eine Aufgabe der vorliegenden Erfindung auch Kleinserien von Chipkartenmodulen mit geringem technischen Aufwand individualisieren zu können. Ferner sollen bereits hergestellte Chipkarten und Chipkartenmodule einfach mit individuellen Merkmalen nachgerüstet werden.

Diese Aufgabe wird durch ein Verfahren und eine Vorrichtung mit den Merkmalen der unabhängigen Ansprüche gelöst. In den davon abhängigen Ansprüchen sind vorteilhafte Ausgestaltungen und Weiterbildungen der Erfindung angegeben.

Demgemäß wird ein Verfahren zum Individualisieren eines Chipmoduls für einen tragbaren Datenträger mit den folgenden Schritten vorgeschlagen. Erfindungsgemäß erfolgt ein Bereitstellen des Chipmoduls, welches einen integrierten Schaltkreis und eine Metallisierungsschicht mit mindestens einer Kontaktfläche zum kontaktbehafteten Daten- und/ oder Energietransfer zwischen einem externen Gerät und dem integrierten Schaltkreis aufweist, und ein Einbringen eines Individualisierungsmerkmals in die Metallisierungsschicht.

Ein Individualisieren erfolgt mittels des Individualisierungsmerkmals, welches beispielweise als ein Bild, Logo, Schriftzug oder dergleichen in die Chipmoduloberfläche eingelasert, das heißt mittels Laser eingraviert wird. Das Individualisieren stellt hierbei nicht unbedingt darauf ab, dass jedes einzelne Chipmodul gegenüber eines weiteren Chipmoduls ein eigenes Individualisierungsmerkmal trägt, sondern vielmehr, dass Kleinserien von Chipmodulen mit gleichen Individualisierungsmerkmalen innerhalb der Serie produziert werden. So können beispielsweise 1.000 Chipmodule das gleiche Logo, also das gleiche Individualisierungsmerkmal tragen und weitere 1.000 einer weiteren Serie ein anderes Logo. Somit sind Chipmodule der ersten Serie gegenüber Chipmodulen der zweiten Serie individualisiert.

Das Individualisierungsmerkmal kann hierbei als jegliches Bild vorliegen, welches als Sicherheitsmechanismus verwendet werden kann. Es ist jedoch auch möglich ein Bild nach kreativen Anhaltspunkten auszugestalten und jegliches gewünschte Motiv in das Chipmodul einzubringen. Als Sicherheitsmechanismus eignen sich besonders feine Konturen, welche von Nachahmern nur mit hohem technischem Aufwand in den Chip eingebracht werden können.

Die mindestens eine Metallisierungsschicht weist mindestens eine Kontaktfläche auf, welche beispielsweise mittels Lasern aus der Metallisierungsschicht heraus gelasert wird. So werden Strukturen und Konturen in die Metallisierungsschicht eingebracht, wobei die verbleibenden Teile der Metallisierungsschicht die Kontaktfläche bilden. Diese werden beispielsweise bei einem Zahlvorgang auf einen Kassenempfänger aufgelegt und Zahldaten werden übertragen.

Ein Einbringen eines Individualisierungsmerkmals in die Metallisierungsschicht erfolgt derart, dass zum Beispiel mittels Laser oder Fräsen individuelle Kontaktflächen aus der Metallisierungsschicht geformt werden. Somit werden Kontaktflächen derart vereinzelt, dass die Konturen der Kontaktflächen eine eigene, individuelle Kontur aufweisen. Diese Kontur kann als das Individualisierungsmerkmal bezeichnet werden. Es können jedoch auch unabhängig von den Kontaktflächen quer über das Chipmodul ein Bild und/oder ein Schriftzug gelasert werden. Das Individualisierungsmerkmal zeichnet sich dadurch aus, dass in die sichtbare Oberfläche des Chipmoduls Vertiefungen eingebracht werden, die ein Bild erkennen lassen. Die Vertiefungen können hierbei so tief gehen, dass die Metallisierungsschicht stellenweise komplett abgetragen wird und somit individuelle Kontaktflächen entstehen. Ferner können in einen Rand einer Kontaktfläche z.B. ein Muster oder ein Code z.B. mittels eines Lasers eingebracht werden, wobei das Muster oder der Code nur mittels eines Mikroskops zu erkennen ist.

Bei der Herstellung eines tragbaren Datenträgers werden der integrierte Schaltkreis, die Antenne und die metallischen Kontaktflächen auf einem Chipmodul angeordnet, welches dann in eine Kavität eines Datenträgerkörpers eingebracht und dort beispielsweise verklebt wird. Der integrierte Schaltkreis und die mit dem integrierten Schaltkreis verbundene Antenne sind dabei auf einer ersten Seite eines Trägers angeordnet, wobei die Windungen der Antenne um den integrierten Schaltkreis herum, beispielsweise entlang des Randes des Trägers, geführt werden. Auf einer der ersten Seite gegenüberliegenden zweiten Seite des Trägers werden die metallischen Kontaktflächen angeordnet und mit dem integrierten Schaltkreis verbunden, entweder mittels sogenannter "Bumps" bei Flip-Chip-Modulen oder sogenannter Bonddrähte durch den Träger hindurch. Die metallischen Kontaktflächen können zum Beispiel mit Gold oder Palladium beschichtet werden. Üblicherweise liegt der Träger während der Herstellung in Form eines sogenannten Modulbandes vor, auf dem mehrere Chipmodule hergestellt werden und aus dem die fertigen Chipmodule dann ausgestanzt werden.

Gemäß einem Aspekt der vorliegenden Erfindung erfolgt das Einbringen des Individualisierungsmerkmals nach einem Vereinzeln des Chipmoduls. Dies hat den Vorteil, dass nicht in den Produktionsprozess herkömmlicher Chipmodule eingegriffen werden muss, sondern wie bekannt Module vereinzelt werden und danach wird das Individualisierungsmerkmal aufgebracht. Somit erfolgt kein Bereitstellen des Individualisierungsmerkmals auf einem Modulträgerband seitens eines Zulieferers, sondern das Individualisierungsmerkmal kann abgetrennt vom Bereitstellen des Modulträgerbands in kleinen Auflagen nachträglich eingebracht werden.

Gemäß einem weiteren Aspekt der vorliegenden Erfindung wird die mindestens eine Kontaktfläche mittels eines Lasers ausgeformt. Dies hat den Vorteil, dass die Kontaktfläche mittels eines Lasers durch Abtragen von Teilen der Metallisierungsschicht eingebracht und somit individualisiert geformt werden kann.

Gemäß einem weiteren Aspekt der vorliegenden Erfindung wird die Metallisierungsschicht mittels eines Lasers zumindest teilweise abgetragen. Dies hat den Vorteil, dass nicht ein komplettes Abtragen der Metallisierungsschicht erfolgen muss, sondern zum Einbringen eines optischen Merkmals kann es bereits ausreichen, lediglich teilweise die Metallisierungsschicht derart abzutragen, dass analog eines Reliefs eine Laserung erkennbar ist.

Gemäß einem weiteren Aspekt der vorliegenden Erfindung ist das Individualisierungsmerkmal durch eine Ausprägung der mindestens einen Kontaktfläche gegeben. Dies hat den Vorteil, dass die Kontaktfläche mittels Abtragens der Metallisierungsschicht individuell in die Metallisierungsschicht eingelasert werden kann. Somit zeigen die einzelnen Kontaktflächen ein vorbestimmtes Muster.

Gemäß einem weiteren Aspekt der vorliegenden Erfindung ist das bereitgestellte Chipmodul in einem kartenförmigen Datenträger verbaut. Dies hat den Vorteil, dass bereits hergestellte, herkömmliche Chipkarten erfindungsgemäß nachgerüstet werden können. Somit erfolgt wieder kein Herstellen von Individualisierungsmerkmalen bereits auf einer Modulträgerfolie, sondern in individuelles Einbringen des Individualisierungsmerkmals in das Chipmodul auch in kleinen Auflagen mit geringem technischen Aufwand.

Gemäß einem weiteren Aspekt der vorliegenden Erfindung werden mittels des Individualisierungsmerkmals individuelle Modulkontakte erzeugt. Dies hat den Vorteil, dass die Modulkontakte sowohl voneinander separiert werden und gleichzeitig das Individualisierungsmerkmal eingebracht werden kann. Somit erfolgen diese beiden Arbeitsschritte erfindungsgemäß in einem Schritt, was technisch einfach zu realisieren ist.

Gemäß einem weiteren Aspekt der vorliegenden Erfindung wird das Individualisierungsmerkmal in eine Chipmoduloberfläche eingebracht. Dies hat den Vorteil, dass in einfacher Weise Chipmodule mit dem Individualisierungsmerkmal nachgerüstet werden können.

Gemäß einem weiteren Aspekt der vorliegenden Erfindung wird die Metallisierungsschicht zum Einbringen des Individualisierungsmerkmals mittels eines Lasers bearbeitet. Dies hat den Vorteil, dass ein Bearbeiten anhand eines Steuerprogramms automatisiert durchgeführt werden kann und der Laser vorbestimmte Reliefs in den Metallisierungsschicht einbringen kann.

Gemäß einem weiteren Aspekt der vorliegenden Erfindung weist das Chipmodul mindestens eine Metallisierungsschicht auf. Dies hat den Vorteil, dass auch eine Trägerfolie vorgesehen werden kann, welche beidseitig eine Metallisierungsschicht aufweist. Somit liegt eine Trägerschicht mit zwei Metallisierungsschichten vor.

Die Aufgabe wird auch gelöst durch eine Vorrichtung zur Individualisierung eines Chipkartenmoduls, mit einer Bereitstellungseinheit, eingerichtet zum Bereitstellen des Chipmoduls, welches einen integrierten Schaltkreis und eine Metallisierungsschicht mit mindestens einer Kontaktfläche zum kontaktbehafteten Daten- und/oder Energietransfer zwischen einem externen Gerät und dem integrierten Schaltkreis aufweist, wobei eine Laserquelle, eingerichtet zum Einbringen eines Individualisierungsmerkmals in die Metallisierungsschicht, vorgesehen ist.

Die Vorrichtung kann eine Laserquelle und eine Halteeinrichtung aufweisen, welche den Chip fixiert. Eine solche Halteeinrichtung kann ein Chipmodul oder auch eine komplette Chipkarte halten, damit der Laser das Individualisierungsmerkmal einbringen kann. Eine Chipkarte ist im Rahmen der vorliegenden Erfindung jegliche Chipkarte, also eine SIM-Karte jeglicher Größe, eine Bankkarte oder eine Zugangskarte.

Gemäß einem Aspekt der vorliegenden Erfindung ist die Vorrichtung derart eingerichtet, dass das Einbringen des Individualisierungsmerkmals nach einem Vereinzeln des Chipmoduls erfolgt. Dies hat den Vorteil, dass nicht in den Produktionsprozess herkömmlicher Chipmodule eingegriffen werden muss, sondern wie bekannt Module vereinzelt werden und danach wird das Individualisierungsmerkmal aufgebracht. Somit erfolgt kein Bereitstellen des Individualisierungsmerkmals auf einem Modulträgerband seitens eines Zulieferers, sondern das Individualisierungsmerkmal kann abgetrennt vom Bereitstellen des Modulträgerbands in kleinen Auflagen nachträglich eingebracht werden.

Die Aufgabe wird auch gelöst durch ein Chipmodul für einen tragbaren Datenträger, welches einen integrierten Schaltkreis und eine Metallisierungsschicht mit mindestens einer Kontaktfläche zum kontaktbehafteten Daten- und/ oder Energietransfer zwischen einem externen Gerät und dem integrierten Schaltkreis aufweist, wobei ein Individualisierungsmerkmal in die Metallisierungsschicht mittels eines Lasers eingebracht ist.

Gemäß einem Aspekt der vorliegenden Erfindung liegt das Individualisierungsmerkmal als ein optisches Merkmal vor. Dies hat den Vorteil, dass das Individualisierungsmerkmal leicht zu erkennen ist und beispielsweise als ein Bild, welches in das Chipmodul eingelasert ist, vorliegen kann.

Die Aufgabe wird auch gelöst durch ein Computerprogramm mit Steuerbefehlen, welche einen Computer veranlassen das beschriebene Verfahren auszuführen. Das Computerprogramm kann beispielweise Verwendung finden, bei der Steuerung der Vorrichtung zum Individualisieren der Chipmodule.

Somit wird erfindungsgemäß ein Verfahren, ein Chipmodul, eine Vorrichtung zum Individualisieren und ein entsprechendes Computerprogramm vorgeschlagen. Diese ermöglichen es auch Kleinserien von Chipmodulen zu individualisieren, ohne in bestehende technische Produktionsprozesse einzugreifen.

Weitere Merkmale und Vorteile der Erfindung ergeben sich aus der folgenden Beschreibung erfindungsgemäßer Ausführungsbeispiele, sowie weiteren Ausführungsalternativen im Zusammenhang mit den folgenden Zeichnungen, die zeigen:
- Figur 1:: ein Modulträgerband mit einer Trägerfolie, welche auf der Vorderseite und optional auf der Rückseite mit einer Metallisierungsschicht versehen ist als ein Ausgangspunkt für die vorliegende Erfindung;
- Figur 2:: eine Chipkarte mit dem Chipmodul gemäß einem Aspekt der vorliegenden Erfindung;
- Figur 3:: ein Chipmodul mit einem Individualisierungsmerkmal gemäß einem Aspekt der vorliegenden Erfindung; und
- Figur 4:: eine Trägerfolie mitsamt einer Metallisierungsschicht gemäß einem Aspekt der vorliegenden Erfindung.

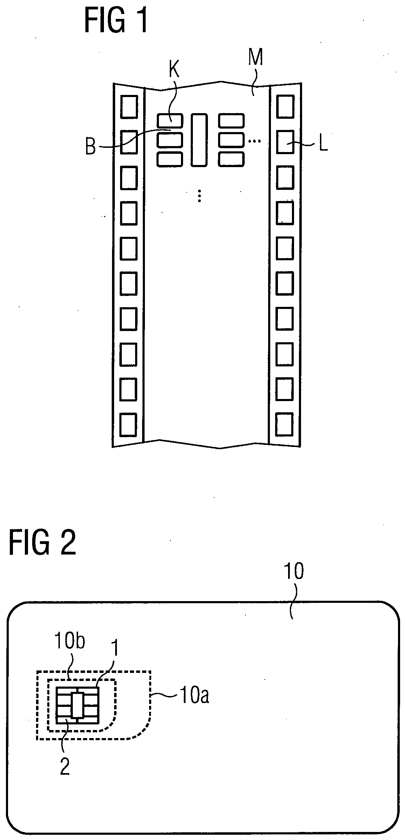

Figur 1 zeigt schematisch ein Modulträgerband M mit einer Trägerfolie. Ein Modulträgerband M weist eine Trägerfolie auf, welche auf der Vorderseite und optional auf der Rückseite mit einer Metallisierungsschicht versehen ist. Die Metallisierungsschicht kann sich aus verschiedenen Metallisierungsschichten zusammensetzen. Wie in der vorliegenden Figur dargestellt ist, werden, wenn benötigt Transportlöcher L durch einen geeigneten Prozess, z.B. Laserschneiden, in das Modulträgerband M eingebracht. Die Metallisierungsschicht oder die Metallisierungsschichten weisen einzelne Bereiche B auf, welche Kontaktflächen K eines Chipmoduls voneinander separieren.

In Figur 2 ist ein tragbarer Datenträger 10,10a,10b dargestellt, wie er als Ausgangspunkt für die vorliegende Erfindung dienen kann. Der tragbare Datenträger 10,10a,10b kann sowohl als SIM Karte vorliegen oder als Kreditkarte. Besonders vorteilhaft ist es erfindungsgemäß, dass sowohl der tragbare Datenträger 10,10a,10b mit Chipmodul mit einem Individualisierungsmerkmal versehen werden kann, als auch das Chipmodul alleine. Somit wird das Individualisierungsmerkmal auf einen bereits vereinzelten Chip aufgebracht. Dieser kann lose oder in dem tragbaren Datenträger 10,10a,10b fixiert sein.

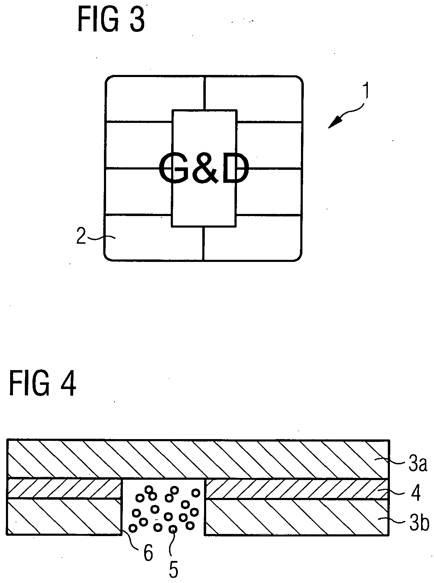

Figur 3 zeigt in einer schematischen Nahaufnahme das erfindungsgemäße Chipmodul 1 mitsamt dem Individualisierungsmerkmal. Dies ist in der vorliegenden Figur mittig auf dem Chipmodul 1 angeordnet. Generell steht gemäß der vorliegenden Erfindung die gesamt Oberfläche des Chipmoduls 1 zum Einbringen des Individualisierungsmerkmals zur Verfügung. Vorliegend liegt das Individualisierungsmerkmal als ein Schriftzug vor, der in das Chipmodul eingelasert ist. Bzgl. der Kontaktflächen ist im vorliegenden Aspekt eine Standardkontur gewählt, das heißt die Konturen wurden nicht angepasst. Hierbei ist es jedoch auch möglich, erfindungsgemäß die im Wesentlichen viereckigen Isolierungen, also die Vertiefungen in der Metallisierungsschicht, individuell auszugestalten und derart in die Metallisierungsschicht einzubringen, dass eine individuelle Form der Kontaktflächen 2 entsteht.

Figur 4 zeigt ein Schichtenmodell mit einer Metallisierungsschicht 3a, einer Trägerfolie 4 und einer weiteren Metallisierungsschicht 3b. In der Figur 1 sind die notwendigen ISO Kontaktflächen K dargestellt. Diese werden durch einen Laserprozess aus der Metallisierungsschicht 3a, 3b strukturiert, wie dies in Figur 4 gezeigt ist. Dabei wird die Metallisierungsschicht 3a, 3b bis auf die Trägerfolie 4 abgetragen. Hierbei entsteht ein isolierter Bereich zwischen den ISO Kontaktflächen 2. Es kann die Form der Kontaktflächen 2 außerhalb der ISO Kontaktflächen 2, beliebig gestaltet werden. In den Figuren ist nur jeweils eine beispielhafte Kontaktflächenausgestaltung dargestellt. In Figur 4 ist dargestellt wie, falls benötigt, eine elektrische Verbindung zwischen der vorderseitigen Metallisierungsschicht 3a und der rückseitigen Metallisierungsschicht 3b realisiert werden kann. Hierzu wird mit einem geeigneten Prozessschritt, z.B. Laser, eine Vertiefung 6 durch die rückseitige Metallisierungsschicht und der Trägerfolie 4 erzeugt, die mit einem leitfähige Material, z.B. Silberleitpasten 5 aufgefüllt wird, so dass eine elektrische Verbindung zwischen vorderseitigen und rückseitigen Metallisierungsschicht 3a, 3b gebildet wird. Hierbei muss die Vertiefung 6 nicht vollständig bis zur Oberkante der rückseitigen Metallisierungsschicht aufgefüllt werden. Falls rückseitige Metallisierungsflächen 3b, z.B. Dual-Interface Anschlüsse oder Anschlüsse für einen Chip, welche in FlipChip Technologie aufgebracht werden müssen, geschaffen werden, so kann das wie auf den vorderseitigen Metallisierungsflächen 3a durch Laserstrukturierung erfolgen. Somit kann erfindungsgemäß das Individualisierungsmerkmal in die Metallisierungsschicht (3a, 3b) eingebracht werden.

Ausgestaltungsvarianten beinhalten Vertiefungen die sich auch am späteren Rand des ausgestanzten Moduls befinden können. Als Alternative zum Ausstanzen der Module können diese auch durch ein flexibleres Verfahren, welches individuelle Formen zulässt, aus dem Modulträgerband vereinzelt werden, wie zum Beispiel Laserschneiden, Wasserstrahlschneiden oder Fräsen.

Im Folgenden werden weitere Aspekte der vorliegenden Erfindung erläutert. So wird auch ein Verfahren zur Individualisierung eines Chipmoduls vorgeschlagen, für einen kartenförmigen Datenträger, wobei das Chipmodul eine Metallisierung mit voneinander isolierten Kontaktflächen zum kontaktbehafteten Daten- und/oder Energieaustausch aufweist, dadurch gekennzeichnet, dass die Individualisierung durch des Chipmoduls eine Bearbeitung der Metallisierung mittels eines Lasers während oder nach der Herstellung der voneinander isolierten Kontaktflächen erzeugt wird. Alternativ erfolgt dies während oder nach dem Schritt des Isolierens.

Es ist weiterhin ein Aspekt der vorliegenden Erfindung, dass die Bearbeitung der Metallisierung mittels des mindestens einen Lasers zumindest auch eine Bearbeitung der Modulkontaktflächen umfasst.

Es ist weiterhin ein Aspekt der vorliegenden Erfindung, dass bei der Bearbeitung der Metallisierung mittels des zumindest einen Lasers ein oder mehrere Aussparungen oder Strukturierungen in der Metallisierung erzeugt werden. Gemäß einem weiteren Aspekt der vorliegenden Erfindung ist die Aussparungen oder Strukturierungen ein oder mehrere der folgenden Symbole: Logos, Bilder, numerische Zeichen und alphabetische Zeichen.

Es ist weiterhin ein Aspekt der vorliegenden Erfindung, dass ein Herstellen der voneinander isolierten Kontaktflächen mittels des mindestens eines Lasers erfolgt. Es ist weiterhin ein Aspekt der vorliegenden Erfindung, dass die Individualisierung des Chipmoduls nach Implantierung des Chipmoduls in einen kartenförmigen Datenträger durchgeführt wird. Es ist weiterhin ein Aspekt der vorliegenden Erfindung, dass das Individualisieren der Oberfläche des kartenförmigen Datenträgers mittels des mindestens einen Lasers erfolgt.

Weiter wird ein Chipmodul für einen kartenförmigen Datenträger vorgeschlagen, umfassend eine Metallisierung mit voneinander isolierten Kontaktflächen zum kontaktbehafteten Daten- und/ oder Energieaustausch, dadurch gekennzeichnet, dass die Metallisierung ein oder mehrere durch Laserung erzeugte Aussparungen oder Strukturierungen innerhalb oder außerhalb, oder innerhalb und außerhalb, der voneinander isolierten Kontaktflächen aufweist.

Es ist weiterhin ein Aspekt der vorliegenden Erfindung, dass die durch Laserung erzeugten Aussparungen oder Strukturierungen ein oder mehrere der folgenden Symbole darstellen: Logos, Bilder, numerische Zeichen und alphabetische Zeichen. Außerdem wird ein kartenförmiger Datenträger mit einem Chipmodul nach einem der vorherigen Aspekte vorgeschlagen.

Somit werden Kontaktflächen für eine äußere Schnittstelle oder einen Chip durch Entfernung der Metallisierungsschicht, zum Beispiel mittels Laser individuell hergestellt. Dies ermöglicht eine schnelle und kostengünstige Herstellung von individuellen Modulkontakten. Module können in individuellen Formen aus dem Trägerband vereinzelt werden.

## Patentansprüche

1. Verfahren zum Individualisieren eines Chipmoduls (1) für einen tragbaren Datenträger (10, 10a, 10b), umfassend ein Bereitstellen des Chipmoduls (1), welches einen integrierten Schaltkreis und eine Metallisierungsschicht (3a, 3b) mit mindestens einer Kontaktfläche (2) zum kontaktbehafteten Daten- und/oder Energietransfer zwischen einem externen Gerät und dem integrierten Schaltkreis aufweist, **gekennzeichnet durch** den Schritt des Einbringens eines Individualisierungsmerkmals in die Metallisierungsschicht (3a, 3b).

2. Verfahren nach Anspruch 1, **dadurch gekennzeichnet, dass** das Einbringen des Individualisierungsmerkmals nach einem Vereinzeln des Chipmoduls (1) erfolgt.

3. Verfahren nach Anspruch 1 oder 2, **dadurch gekennzeichnet dass** die mindestens eine Kontaktfläche (2) mittels eines Lasers ausgeformt wird.

4. Verfahren nach einem der vorherigen Ansprüche, **dadurch gekennzeichnet, dass** die Metallisierungsschicht (3a, 3b) mittels eines Lasers zumindest teilweise abgetragen wird.

5. Verfahren nach einem der vorherigen Ansprüche, **dadurch gekennzeichnet, dass** das Individualisierungsmerkmal durch eine Ausprägung der mindestens einen Kontaktfläche (2) gegeben ist.

6. Verfahren nach einem der vorherigen Ansprüche, **dadurch gekennzeichnet, dass** das bereitgestellte Chipmodul (1) in einem kartenförmigen Datenträger (10, 10a, 10b) verbaut ist.

7. Verfahren nach einem der vorherigen Ansprüche, **dadurch gekennzeichnet, dass** mittels des Individualisierungsmerkmals individuelle Modulkontakte (2) erzeugt werden.

8. Verfahren nach einem der vorherigen Ansprüche, **dadurch gekennzeichnet, dass** das Individualisierungsmerkmal in eine Chipmoduloberfläche eingebracht wird.

9. Verfahren nach einem der vorherigen Ansprüche, **dadurch gekennzeichnet, dass** die Metallisierungsschicht (3a, 3b) zum Einbringen des Individualisierungsmerkmals mittels eines Lasers bearbeitet wird.

10. Verfahren nach einem der vorherigen Ansprüche, **dadurch gekennzeichnet, dass** das Chipmodul (1) mindestens eine Metallisierungsschicht (3a, 3b) aufweist.

11. Vorrichtung zur Individualisierung eines Chipkartenmoduls (1), umfassend eine Bereitstellungseinheit, die eingerichtet ist, das Chipmodul (1) bereitzustellen, welches einen integrierten Schaltkreis und eine Metallisierungsschicht (3a, 3b) mit mindestens einer Kontaktfläche (2) zum kontaktbehafteten Daten- und/oder Energietransfer zwischen einem externen Gerät und dem integrierten Schaltkreis aufweist, **gekennzeichnet durch** eine Laserquelle, die eingerichtet ist, ein Individualisierungsmerkmal in die Metallisierungsschicht (3a, 3b) einzubringen.

12. Vorrichtung nach Anspruch 11, **dadurch gekennzeichnet, dass** die Vorrichtung derart eingerichtet ist, dass das Einbringen des Individualisierungsmerkmals nach einem Vereinzeln des Chipmoduls (1) erfolgt.

13. Chipmodul (1) für einen tragbaren Datenträger, welches einen integrierten Schaltkreis und eine Metallisierungsschicht (3a, 3b) mit mindestens einer Kontaktfläche (2) zum kontaktbehafteten Daten- und/ oder Energietransfer zwischen einem externen Gerät und dem integrierten Schaltkreis aufweist, **dadurch gekennzeichnet, dass** ein Individualisierungsmerkmal in die Metallisierungsschicht (3a, 3b) mittels eines Lasers eingebracht ist.

14. Chipmodul (1) nach Anspruch 13, **dadurch gekennzeichnet, dass** das Individualisierungsmerkmal als ein optisches Merkmal vorliegt.

15. Computerprogramm mit Steuerbefehlen, welche einen Computer veranlassen das Verfahren gemäß einem der Ansprüche 1 bis 11 auszuführen.
